# DEMANDE DE BREVET EUROPEEN

(11) **EP 2 080 653 A1**
(43) Date de publication de la demande: **22.07.2009**
(21) Numéro de dépôt: 09150487.8
(22) Date de dépôt: 14.01.2009
(51) Int. Cl.: B60J 7/00

(54) **Dispositif d'occultation d'une fenêtre panoramique de véhicule automobile, à mécanisme de tension de rideaux**

(30) Priorité: 18.01.2008 FR 0850323
(71) Demandeur: Peugeot Citroën Automobiles SA, 78140 Vélizy-Villacoublay (FR)
(72) Inventeur: Barron, Gilles, 25420, BART (FR)
(74) Mandataire: Vigand, Régis Louis Michel

(57) **Abrégé**

Un dispositif (D) est dédié à l'occultation d'une fenêtre panoramique (TP) d'un véhicule automobile. Il comprend i) deux rideaux (R1, R2) comportant chacun un premier bord d'extrémité (BE1) libre et un second bord d'extrémité (BE2), ii) un rouleau rotatif (RR) auquel sont solidarisés les seconds bords d'extrémité (BE2) de manière à permettre l'enroulement simultané et superposé des deux rideaux (R1, R2) et le coulissement de ces derniers en regard de la fenêtre panoramique (TP) selon des sens opposés, et iii) des moyens de support (MS) chargés de supporter le rouleau (RR) tout en permettant sa rotation et en lui conférant un degré de liberté de déplacement de sorte qu'il puisse tendre les rideaux (R1, R2) de façon sensiblement égale.

## Description

L'invention concerne les dispositifs destinés à occulter les fenêtres panoramiques de certains véhicules automobiles au moyen de deux rideaux dont les coulissements sont couplés et de sens opposés.

On entend ici par «fenêtre panoramique» tout élément transparent (en verre ou matériau synthétique) implanté dans un toit, ou constituant une partie au moins d'un toit, de véhicule automobile. Par conséquent, il pourra s'agir d'un toit panoramique (également appelé «cielo»), ou d'un toit ouvrant, éventuellement coulissant.

Comme le sait l'homme de l'art, certaines fenêtres panoramiques de véhicule automobile sont équipées d'un dispositif d'occultation comprenant deux rideaux dont les coulissements sont couplés et de sens opposés par le biais d'un unique rouleau rotatif, éventuellement motorisé. Un tel dispositif d'occultation est par exemple décrit dans le document brevet EP 1426219. Il comprend plus précisément deux rideaux comportant chacun un premier bord d'extrémité libre et un second bord d'extrémité (opposé au premier), et un rouleau rotatif auquel sont solidarisés les seconds bords d'extrémité. Les deux rideaux peuvent ainsi s'enrouler (et se dérouler) de façon sensiblement simultanée et superposée et coulisser en regard de deux parties de la fenêtre panoramique selon des sens opposés.

Ce type de dispositif à un seul rouleau est avantageux car il comporte moins d'éléments et donc un encombrement moindre qu'un dispositif à deux rouleaux. En outre, son encombrement réduit lui permet de ne masquer qu'une très petite surface de la fenêtre panoramique.

Cependant, ce type de dispositif ne permet pas de compenser des différences sensibles de tension entre les deux rideaux, si bien que l'un d'entre eux peut comporter des ondulations ou des déformations locales (par exemple des bombements) inesthétiques, qui peuvent être encore amplifiés lorsqu'une vitre ou le toit ouvrant du véhicule est ouvert.

L'invention a pour but d'améliorer la situation, et plus précisément d'améliorer la tension des deux rideaux d'occultation.

Elle propose à cet effet un dispositif du type présenté dans la partie introductive et comprenant en outre des moyens de support agencés pour supporter le rouleau tout en permettant sa rotation et en lui conférant un degré de liberté de déplacement de sorte qu'il puisse tendre les rideaux de façon sensiblement égale.

Le dispositif d'occultation selon l'invention peut comporter d'autres caractéristiques qui peuvent être prises séparément ou en combinaison, et notamment :
- les moyens de support peuvent être agencés pour permettre alternativement, un déplacement du rouleau vers l'un et un déplacement du rouleau vers l'autre, des premiers bords d'extrémité des deux rideaux ;
- dans un premier mode de réalisation ses moyens de support peuvent comporter deux platines sensiblement parallèles entre elles, sensiblement perpendiculaires aux seconds bords d'extrémité et munies chacune d'une lumière de forme oblongue agencée pour recevoir et permettre la translation de l'une des deux extrémités d'un axe sur lequel est monté le rouleau ;
   ➢ les lumières peuvent présenter une forme allongée dans une direction parallèle à la direction de coulissement des rideaux par rapport à la fenêtre panoramique ;
   ➢ son rouleau peut par exemple être solidarisé fixement à l'axe ;
   ➢ en variante, son rouleau peut par exemple être monté à rotation libre sur l'axe;
   ➢ il peut comprendre des moyens de couplage agencés pour coupler les déplacements des extrémités opposées de l'axe sur lequel est monté le rouleau ;
      - ces moyens de couplage peuvent par exemple comprendre deux roues dentées, fixées respectivement aux deux extrémités opposées de l'axe, et deux crémaillères montées sensiblement parallèlement aux lumières, de façon décalée verticalement par rapport à ces dernières, de manière à engrener les dents des roues dentées et ainsi coupler les translations des extrémités opposées de l'axe ;
- dans un second mode de réalisation ses moyens de support peuvent être du type dit pendulaire et comporter deux bras comprenant chacun une première extrémité couplée à l'une des deux extrémités d'un axe sur lequel est monté le rouleau et une seconde extrémité propre à être montée à rotation par rapport à une partie du véhicule ;
   ➢ son rouleau peut être monté à rotation libre sur l'axe, et les premières extrémités des bras peuvent être respectivement solidarisées fixement aux extrémités de l'axe;
   ➢ en variante, son rouleau peut être solidarisé fixement à l'axe, et les extrémités opposées de l'axe peuvent être respectivement couplées à rotation libre aux premières extrémités des bras ;
   ➢ il peut comprendre des moyens de couplage agencés pour coupler les déplacements des extrémités opposées de l'axe sur lequel est monté le rouleau ;
      • les moyens de couplage peuvent comprendre un axe auxiliaire monté à rotation libre par rapport à la partie précitée du véhicule et comprenant deux extrémités solidarisées fixement et respectivement aux secondes extrémités des bras, de manière à coupler leur rotation ;
- il peut comprendre un axe complémentaire monté parallèlement au rouleau rotatif et de façon décalée par rapport à ce dernier de manière à décaler angulairement le lieu où l'un des rideaux débute son enroulement sur le rouleau rotatif par rapport au lieu où l'autre rideau débute son enroulement sur ce même rouleau rotatif ;
- son rouleau peut être couplé à un moteur propre à l'entraîner en rotation.

D'autres caractéristiques et avantages de l'invention apparaîtront à l'examen de la description détaillée ci-après, et des dessins annexés, sur lesquels :
- la figure 1 illustre schématiquement, dans une vue en coupe dans un plan transversal d'un véhicule automobile, un premier exemple de réalisation d'un dispositif d'occultation selon l'invention installé devant un toit panoramique du véhicule,
- les figures 2A et 2B illustrent schématiquement, respectivement dans une vue en coupe dans un plan longitudinal du véhicule automobile et dans une vue de face, une variante de réalisation d'une partie du dispositif d'occultation de la figure 1,
- la figure 3 illustre schématiquement, dans une vue en coupe dans un plan transversal d'un véhicule automobile, un second exemple de réalisation d'un dispositif d'occultation selon l'invention installé devant un toit panoramique du véhicule, et
- la figure 4 illustre schématiquement, dans une vue en coupe dans un plan longitudinal du véhicule automobile, une variante de réalisation d'une partie du dispositif d'occultation de la figure 3.

Les dessins annexés pourront non seulement servir à compléter l'invention, mais aussi contribuer à sa définition, le cas échéant.

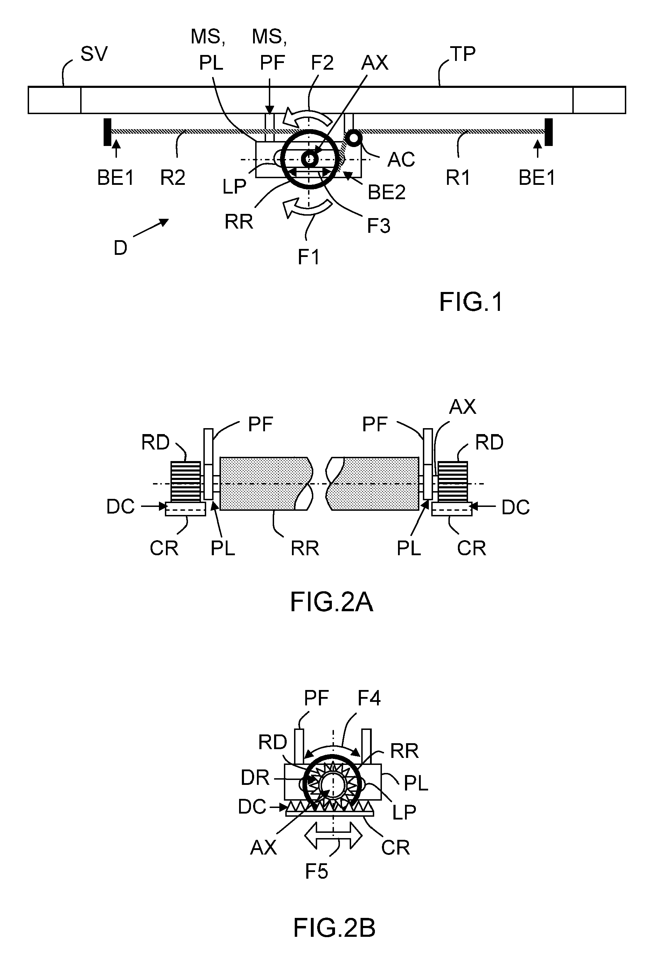

On a schématiquement représenté sur la figure 1 un premier exemple de réalisation d'un dispositif d'occultation D selon l'invention, fixé sur la structure ST d'un véhicule automobile, à l'intérieur de l'habitacle de ce dernier, de manière à pouvoir occulter une partie au moins d'une fenêtre panoramique TP.

Dans cet exemple non limitatif, la fenêtre panoramique TP est un toit panoramique, par exemple de type «cielo». Mais, l'invention n'est pas limitée à ce type de fenêtre panoramique. Elle concerne en effet, tout élément transparent (en verre ou matériau synthétique) implanté dans un toit, ou constituant une partie au moins d'un toit, de véhicule automobile. Par conséquent, il pourra également s'agir d'un toit ouvrant, éventuellement coulissant, par exemple.

Le dispositif d'occultation D, selon l'invention, comprend au moins deux rideaux R1 et R2, un enrouleur de rideau comprenant au moins un rouleau rotatif RR, et des moyens de support MS ou MS'.

Comme on le verra plus loin il est également préférable qu'ils comprennent deux paires de rails de guidage (ou coulisses) parallèles (non représentées) de manière à faciliter le coulissement couplé des rideaux R1 et R2 devant la face interne du toit panoramique TP.

On considère dans ce qui suit, à titre d'exemple non limitatif, que les rideaux R1 et R2 sont destinés à coulisser suivant une direction dite transversale du fait qu'elle est perpendiculaire à l'axe longitudinal du véhicule, de manière à occulter respectivement des parties droite et gauche du toit panoramique TP, par exemple situées au dessus des deux sièges avant du véhicule. Mais, l'invention n'est pas limitée à ce type d'implantation. En effet, elle concerne également et notamment les implantations permettant un coulissement des rideaux R1 et R2 dans la direction longitudinale du véhicule.

Dans le cas d'une implantation permettant un coulissement des rideaux R1 et R2 dans la direction transversale du véhicule, on comprendra que les rails de guidage de chaque paire sont fixés à la structure SV du véhicule au voisinage de bords transversaux du toit panoramique TP et/ou sur la face interne de ce dernier suivant la direction transversale du véhicule. On notera que les bords transversaux sont ceux qui sont sensiblement parallèles à la direction transversale du véhicule. On comprendra également qu'avec une telle implantation le rouleau rotatif RR est fixé à la structure SV du véhicule et/ou au toit panoramique TP de manière à ce que son axe de rotation soit sensiblement parallèle à la direction longitudinale du véhicule.

Le rouleau rotatif RR est destiné à permettre l'enroulement (flèche F1)/ déroulement (flèche F2), sous une force de rappel élastique, des deux rideaux R1 et R2. Il est par exemple installé dans un carter solidarisé à la structure SV du véhicule et/ou à la face interne du toit panoramique TP. La force de rappel élastique est par exemple obtenue au moyen d'au moins un ressort spiralé qui peut être installé à une extrémité du rouleau rotatif RR. Par exemple, chaque ressort spiralé comprend une première extrémité fixée au châssis du dispositif D et une seconde extrémité fixée au cylindre du rouleau rotatif RR.

On notera que le rouleau rotatif RR peut être éventuellement motorisé. Cette motorisation peut par exemple se faire via le rouleau rotatif RR si chaque première extrémité BE1 de rideau R1, R2 dispose d'une force de rappel permettant le déploiement de son rideau. La motorisation prend alors en charge l'enroulement (en luttant contre la force de rappel) et le déroulement (en maîtrisant la force de rappel). On notera que ce mode de motorisation permet d'éviter l'utilisation de ressort(s) spiralé(s). Dans une variante, la motorisation peut par exemple se faire via des câbles de type « push-pull » qui poussent ou tirent les premières BE1 et secondes BE2 extrémités des rideaux R1 et R2. On notera que dans cette variante, d'une part, les premières extrémités BE1 peuvent être motorisées de façon indépendante ou liée, et d'autre part, il est préférable de prévoir au moins un ressort spiralé du type précité.

Chaque rideau R1, R2 comprend un premier bord d'extrémité BE1, libre et pouvant être tiré par un passager de manière à être immobilisé dans une position d'occultation choisie, en l'absence de motorisation, un second bord d'extrémité BE2, solidarisé au rouleau rotatif RR, et deux bords latéraux, sensiblement perpendiculaires aux premier BE1 et second BE2 bords d'extrémité, orientés sensiblement suivant la direction transversale du véhicule dans l'exemple non limitatif décrit, et destinés à coulisser dans les rails de guidage de l'une des deux paires.

La solidarisation des seconds bords d'extrémité BE2 des deux rideaux R1 et R2 au rouleau rotatif RR permet l'enroulement simultané et superposé des deux rideaux R1 et R2 (flèche F1) et le coulissement de ces derniers en regard de la face interne du toit panoramique TP selon des sens opposés. Il est rappelé que dans l'exemple non limitatif décrit, le coulissement consiste en une translation suivant la direction transversale du véhicule.

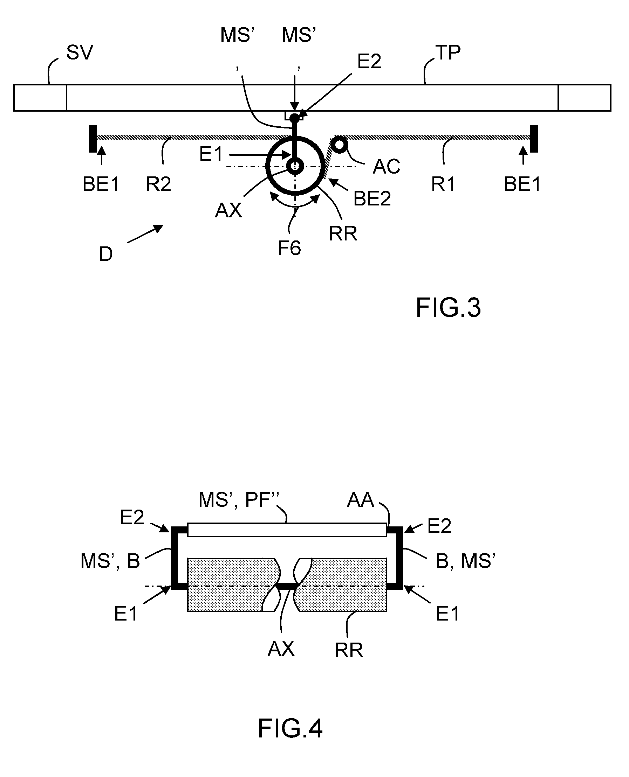

Comme cela est illustré sur les figures 1 et 3, le dispositif d'occultation D peut éventuellement comprendre un axe complémentaire AC monté parallèlement au rouleau rotatif RR et de façon décalée (ici transversalement) par rapport à ce dernier. Cet axe complémentaire AC permet de décaler angulairement le lieu où l'un des rideaux (par exemple R1) débute son enroulement sur le rouleau rotatif RR par rapport au lieu où l'autre rideau (par exemple R2) débute son enroulement sur ce même rouleau rotatif RR.

Selon l'invention, les moyens de support MS (ou MS') sont agencés pour supporter le rouleau rotatif RR tout en permettant sa rotation (flèches F1 et F2) et tout en lui conférant un degré de liberté de déplacement qui lui permet de tendre les rideaux R1 et R2, de façon sensiblement égale. En d'autres termes, les moyens de support MS (ou MS') sont conçus de manière à permettre un libre déplacement du rouleau rotatif RR, de préférence sur une course choisie, sensiblement dans la direction des efforts (ou forces) de tension subis par les rideaux R1 et R2.

Ce libre déplacement peut se faire soit dans la direction de coulissement des rideaux R1 et R2 (ici la direction transversale du véhicule) comme illustré sur les figures 1 et 2 (flèche F3), soit suivant un arc de cercle comme illustré sur les figures 3 et 4 (flèche F6).

Dans l'exemple de réalisation illustré sur la figure 1, les moyens de support MS comportent deux platines PL positionnées de part et d'autre des extrémités opposées du rouleau rotatif RR (voir figure 2A) de manière à être sensiblement parallèles entre elles et sensiblement perpendiculaires aux seconds bords d'extrémité BE2 des rideaux R1 et R2. Chaque platine PL est destinée à être fixée à la structure SV du véhicule ou au toit panoramique TP par une patte de fixation PF appropriée. Par ailleurs, chaque platine PL comprend une lumière (ou ouverture) LP de forme oblongue destinée à recevoir et à permettre la translation (flèche F3) de l'une des deux extrémités d'un axe AX sur lequel est monté le rouleau rotatif RR.

Chaque lumière LP présente préférentiellement une forme allongée suivant une direction qui est parallèle à la direction de coulissement des rideaux R1 et R2 (ici la direction transversale du véhicule). Ainsi, l'axe AX peut se translater librement suivant la direction de coulissement en fonction des différences d'efforts (ou forces) de tension subis par les deux rideaux R1 et R2, de manière à compenser ces différences.

On notera que le rouleau rotatif RR peut être soit solidarisé fixement à l'axe AX, soit monté à rotation libre sur l'axe AX. Comme indiqué précédemment, il peut être également et éventuellement motorisé.

Afin d'éviter que les deux extrémités de l'axe AX ne se translatent pas de façon sensiblement identique, on peut adjoindre au dispositif D des moyens de couplage, comme illustré sur les figures 2A et 2B.

Par exemple et comme illustré de façon non limitative, les moyens de couplage peuvent être du type dit à engrènement. Dans ce cas, les moyens de couplage peuvent par exemple comporter deux crémaillères (linéaires) CR et deux roues dentées (ou pignons) RD. Les deux crémaillères CR sont fixées à la structure SV du véhicule ou au toit panoramique TP par une patte de fixation (non représentée) de manière à être sensiblement parallèles aux lumières LP, mais légèrement décalées verticalement et (ici) longitudinalement par rapport à ces dernières. Les deux roues dentées RD sont respectivement solidarisées aux deux extrémités opposées de l'axe AX. Les dents DR des roues dentées RD engrènent les dents DC des crémaillères CR. Par conséquent, lorsque l'axe AX est entraîné en translation (flèche F3) pour compenser une différence d'efforts de tension, ses deux extrémités sont contraintes par leurs roues dentées RD à se translater de façon identique du fait de l'engrènement.

On comprendra que ce mode de réalisation nécessite que le rouleau rotatif RR soit monté à rotation libre sur l'axe AX de sorte que la rotation de ce dernier, induite par les roues dentées RD en cas de translation, ne provoque pas une rotation non désirée du rouleau rotatif RR.

Dans l'exemple de réalisation illustré sur la figure 3, les moyens de support MS' sont du type dit pendulaire, de manière à permettre un mouvement pendulaire du rouleau rotatif RR. Dans ce cas, les moyens de support MS' comportent par exemple deux bras B (par exemple linéaires) qui comprennent chacun une première extrémité E1, couplée à l'une des deux extrémités d'un axe AX sur lequel est monté le rouleau RR, et une seconde extrémité E2 destinée à être montée à rotation par rapport à une partie du véhicule.

Dans l'exemple non limitatif illustré sur la figure 3, la seconde extrémité E2 de chaque bras B est destinée à être fixée à la structure SV du véhicule ou au toit panoramique TP par une patte de fixation PF' appropriée.

On comprendra que si le rouleau rotatif RR est monté à rotation libre sur l'axe AX, alors les premières extrémités E1 des deux bras B sont respectivement solidarisées fixement aux deux extrémités opposées de l'axe AX, de manière à pouvoir entraîner ce dernier en rotation (flèche F6) sur un secteur angulaire qui est de préférence limité. En revanche, si le rouleau rotatif RR est solidarisé fixement à l'axe AX, les extrémités opposées de l'axe AX sont respectivement couplées à rotation libre aux premières extrémités E1 des deux bras B, de manière à pouvoir entraîner l'axe AX en rotation (flèche F6) sur un secteur angulaire qui est de préférence limité.

Grâce à ce montage pendulaire, l'axe AX (et donc le rouleau rotatif RR) peut se déplacer librement suivant un arc de cercle en fonction des différences d'efforts (ou forces) de tension subis par les deux rideaux R1 et R2, de manière à compenser ces différences. On comprendra que ce déplacement se traduit par une translation du rouleau rotatif RR suivant la direction (ici) transversale du véhicule, combinée à une translation verticale.

Comme indiqué précédemment, le rouleau rotatif RR peut être également et éventuellement motorisé. Dans ce cas, la motorisation peut par exemple se faire via des câbles de type «push-pull» qui poussent ou tirent les premières BE1 et secondes BE2 extrémités des rideaux R1 et R2. On notera que, d'une part, les premières extrémités BE1 peuvent être motorisées de façon indépendante ou liée, et d'autre part, il est préférable de prévoir au moins un ressort spiralé du type précité.

Afin d'éviter que les deux extrémités de l'axe AX ne soient pas entraînées en rotation de façon sensiblement identique, on peut adjoindre des moyens de couplage au dispositif D, comme illustré sur la figure 4.

Par exemple et comme illustré de façon non limitative, les moyens de couplage peuvent comporter un axe auxiliaire AA monté à rotation libre par rapport à la structure SV du véhicule ou au toit panoramique TP, par le biais d'une patte de fixation PF". Cette dernière peut par exemple comporter une partie munie d'un évidement cylindrique dans lequel l'axe auxiliaire AA peut tourner librement.

Cet axe auxiliaire AA comprend deux extrémités opposées qui sont solidarisées fixement et respectivement aux secondes extrémités E2 des deux bras B de manière à ce qu'ils soient sensiblement parallèles l'un à l'autre et à coupler leur rotation. Par conséquent, lorsque l'axe AX est entraîné en rotation (flèche F6) pour compenser une différence d'efforts de tension, ses deux extrémités sont contraintes par les deux bras parallèles B à se déplacer de façon identique du fait du couplage de ces derniers par le biais de l'axe auxiliaire AA.

L'invention ne se limite pas aux modes de réalisation de dispositif d'occultation décrits ci-avant, seulement à titre d'exemple, mais elle englobe toutes les variantes que pourra envisager l'homme de l'art dans le cadre des revendications ci-après.

## Revendications

1. Dispositif (D) d'occultation d'une fenêtre panoramique (TP) d'un véhicule automobile, comprenant deux rideaux (R1, R2) comportant chacun un premier bord d'extrémité (BE1) libre et un second bord d'extrémité (BE2), et un rouleau rotatif (RR) auquel sont solidarisés lesdits seconds bords d'extrémité (BE2) de manière à permettre l'enroulement simultané et superposé des deux rideaux (R1, R2) et le coulissement de ces derniers en regard de ladite fenêtre panoramique (TP) selon des sens opposés, **caractérisé en ce qu'**il comprend en outre des moyens de support (MS, MS') agencés pour supporter ledit rouleau (RR) tout en permettant sa rotation et en lui conférant un degré de liberté de déplacement de sorte qu'il puisse tendre lesdits rideaux (R1, R2) de façon sensiblement égale.

2. Dispositif selon la revendication 1, **caractérisé en ce que** lesdits moyens de support (MS, MS') sont agencés pour permettre alternativement, un déplacement dudit rouleau (RR) vers l'un et un déplacement dudit rouleau (RR) vers l'autre, des premiers bords d'extrémité (BE1) des deux rideaux (R1, R2).

3. Dispositif selon l'une des revendications 1 et 2, **caractérisé en ce que** lesdits moyens de support (MS) comportent deux platines (PL) sensiblement parallèles entre elles, sensiblement perpendiculaires auxdits seconds bords d'extrémité (BE2) et munies chacune d'une lumière (LP) de forme oblongue agencée pour recevoir et permettre la translation de l'une des deux extrémités d'un axe (AX) sur lequel est monté ledit rouleau (RR).

4. Dispositif selon la revendication 3, **caractérisé en ce que** lesdites lumières (LP) présentent une forme allongée dans une direction parallèle à la direction de coulissement desdits rideaux (R1, R2) par rapport à ladite fenêtre panoramique (TP).

5. Dispositif selon l'une des revendications 3 et 4, **caractérisé en ce que** ledit rouleau (RR) est solidarisé fixement audit axe (AX).

6. Dispositif selon l'une des revendications 3 et 4, **caractérisé en ce que** ledit rouleau (RR) est monté à rotation libre sur ledit axe (AX).

7. Dispositif selon l'une des revendications 3 à 6, **caractérisé en ce qu'**il comprend des moyens de couplage (CR, RD) agencés pour coupler les déplacements des extrémités opposées de l'axe (AX) sur lequel est monté ledit rouleau rotatif (RR).

8. Dispositif selon la revendication 7, **caractérisé en ce que** lesdits moyens de couplage (CR, RD) comprennent deux roues dentées (RD), fixées respectivement aux deux extrémités opposées dudit axe (AX), et deux crémaillères (CR) montées sensiblement parallèlement auxdites lumières (LP), de façon décalée verticalement par rapport à ces dernières, de manière à engrener les dents desdites roues dentées (RD).

9. Dispositif selon l'une des revendications 1 et 2, **caractérisé en ce que** lesdits moyens de support (MS') sont du type dit pendulaire et comportent deux bras (B) comprenant chacun une première extrémité (E1) couplée à l'une des deux extrémités d'un axe (AX) sur lequel est monté ledit rouleau (RR) et une seconde extrémité (E2) propre à être montée à rotation par rapport à une partie dudit véhicule.

10. Dispositif selon la revendication 9, **caractérisé en ce que** ledit rouleau (RR) est monté à rotation libre sur ledit axe (AX), et **en ce que** lesdites premières extrémités (E1) des bras (B) sont respectivement solidarisées fixement auxdites extrémités de l'axe (AX).

11. Dispositif selon la revendication 9, **caractérisé en ce que** ledit rouleau (RR) est solidarisé fixement audit axe (AX), et **en ce que** lesdites extrémités opposées de l'axe (AX) sont respectivement couplées à rotation libre auxdites premières extrémités (E1) des bras (B).

12. Dispositif selon l'une des revendications 9 à 11, **caractérisé en ce qu'**il comprend des moyens de couplage (AA) agencés pour coupler les déplacements des extrémités opposées de l'axe (AX) sur lequel est monté ledit rouleau rotatif (RR).

13. Dispositif selon la revendication 12, **caractérisé en ce que** lesdits moyens de couplage (AA) comprennent un axe auxiliaire (AA) monté à rotation libre par rapport à ladite partie dudit véhicule et comprenant deux extrémités solidarisées fixement et respectivement auxdites secondes extrémités (E2) des bras (B), de manière à coupler leur rotation.

14. Dispositif selon l'une des revendications 1 à 13, **caractérisé en ce qu'**il comprend un axe complémentaire (AC) monté parallèlement audit rouleau rotatif (RR) et de façon décalée par rapport à ce dernier de manière à décaler angulairement le lieu où l'un desdits rideaux (R1, R2) débute son enroulement sur ledit rouleau (RR) par rapport au lieu où l'autre desdits rideaux (R1, R2) débute son enroulement sur ledit rouleau (RR).

15. Dispositif selon l'une des revendications1 à 14, **caractérisé en ce que** ledit rouleau (RR) est couplé à un moteur propre à l'entraîner en rotation.
